# EUROPÄISCHE PATENTSCHRIFT

(11) **EP 0 959 276 B1**
(45) Veröffentlichungstag und Bekanntmachung des Hinweises auf die Patenterteilung: **06.05.2004**
(21) Anmeldenummer: 99105834.8
(22) Anmeldetag: 23.03.1999
(51) Int. Cl.: F16J 15/34

(54) **Gleitringdichtung**
Mechanical seal
Garniture mécanique d'étanchéité

(30) Priorität: 19.05.1998 DE 19822356
(43) Veröffentlichungstag der Anmeldung: 24.11.1999
(73) Patentinhaber: Federal-Mogul Burscheid GmbH, 51399 Burscheid (DE)
(72) Erfinder: Zutz, Hans-Henning, 42929 Wermelskirchen (DE); Dengler, Andreas, Dipl.-Ing., 86165 Augsburg (DE)

(56) Entgegenhaltungen:
- US-A- 3 542 377
- US-A- 5 560 621

## Beschreibung

Die Erfindung betrifft eine Vorrichtung mit zwei Maschinenteilen, die mittels einer Gleitringdichtung abgedichtet sind, wobei die Gleitringdichtung aus einem drehfesten und einem umlaufenden Gleitring mit je einer Spannfläche zur Aufnahme eines elastischen O-Ringes besteht, der im Einbauzustand zwischen der Spannfläche und einer korrespondierenden Fläche eines Maschinenteiles sich erstreckt, so daß durch Reibung eine Drehmomentsicherung erzeugt wird, wobei die Spannfläche mindestens eines Gleitringes und die korrespondierende Fläche des Maschinenteiles im Querschnitt rechteckig ausgebildet ist, so daß der O-Ring in Einbaustellung an einer Axial- und einer Radialfläche des Maschinenteiles anliegt.

Das Anwendungsgebiet gattungsgemäßer Gleitringe bzw. Gleitringdichtungen ist insbesondere dort zu finden, wo Betriebsbedingungen mit höchsten Verschleißbeanspruchungen herrschen.
So sind beispielsweise Laufwerke von Gleiskettenfahrzeugen und Baumaschinen während ihres Einsatzes hohem Verschleiß durch Staub, Sand, Schlamm, Steine usw. ausgesetzt. Für die genannten Einsatzfälle wurden Stahlgleitringdichtungen konzipiert wie sie beispielsweise aus der DE 2504 655 C2 bekannt sind.

Die Gleitringdichtung besteht im wesentlichen aus zwei Gleitringen ungleicher geometrischer Form, die mittels diagonal gegenüberliegenden O-Ringen im Maschinenteil angeordnet sind. Derartige Dichtsysteme werden als asymmetrische Gleitringdichtungen bezeichnet.
Moderne, mit nassen Lamellenbremsen ausgestattete Triebachsen von Baumaschinen werden im allgemeinen mit asymmetrischen Gleitringdichtungen abgedichtet. Höhere Leistungsanforderungen an die Achsen erfordern jedoch mittlerweile verstärkte Bremssysteme. Für deren Kühlung muß Kühlöl unter erhöhtem Druck und in großer Menge zur Verfügung stehen. Ein Dauerdruck von 2,5 bar, der je nach Anwendungsfall bis auf 25 bar ansteigen kann, wird bei solchen neuen Konstruktionen eingesetzt.

Damit die Gleitringe durch den hohen hydrostatischen Druck nicht einseitig belastet werden, wodurch ein axiales Verschieben der Gleitringdichtung auftritt, ist es gemäß DE 44 43 448 A1 (& US-A-5 560 621) bereits bekannt, die Dichtung so auszugestalten, daß die Gleitringe druckentlastet abdichten.
Bei diesem System ist es allerdings notwendig, daß die O-Ringe eine konische Spannfläche sowohl an den Gleitringen als auch im Maschinenteil aufweisen, da sonst der hydrostatische Druck nicht hinter den O-Ring gelangen kann.
Die Verwendung von konischen Spannflächen hat jedoch den Nachteil, daß die Gleitringdichtung in axialer Richtung relativ lang ist.

Der Erfindung liegt die Aufgabe zugrunde, eine druckentlastete asymmetrische Gleitringdichtung in einer derartigen Vorrichtung zu schaffen, die in axialer Richtung kürzer als bekannte Gleitringdichtungen ausgebildet ist.

Diese Aufgabe wird erfindungsgemäß durch die kennzeichnenden Merkmale des Patentanspruch 1 gelöst. Vorteilhafte Ausgestaltungen der Erfindung ergeben sich aus den Unteransprüchen.

Durch die besondere Ausbildung des O-Ringes besteht die Möglichkeit, einen Gleitring ohne konische Spannfläche zu benutzen. Die axiale Länge der korrespondierenden Nut des Maschinenteiles braucht auch nur noch etwa der Dicke des O-Ringes zu entsprechen. Da der O-Ring sich an der Radialfläche des Maschinenteiles abstützen kann, können im Durchmesser kleinere O-Ringe zur Anwendung gelangen, insgesamt wird so eine axial kurzbauende Gleitringdichtung geschaffen.

Die Erfindung ist anhand eines Ausführungsbeispieles in der Zeichnung dargestellt und wird im folgenden näher erläutert. Es zeigen:
- Figur 1: eine erfindungsgemäße Vorrichtung mit der Gleitringdichtung in eingebautem Zustand
- Figur 2a bis 2c: verschiedene Ausgestaltungen eines O-Ringes

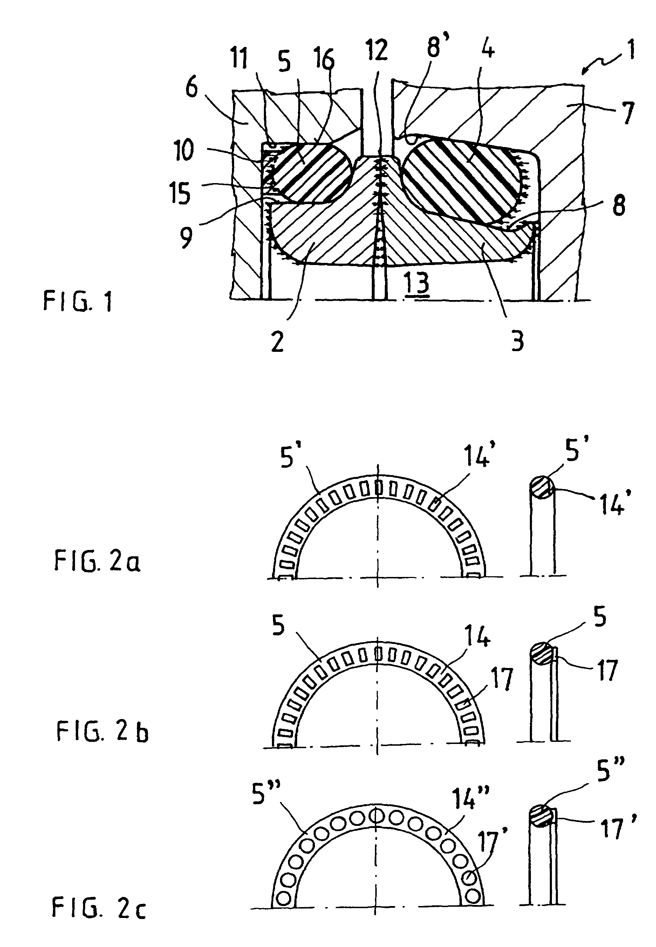

Die in Figur 1 dargestellte Gleitringdichtung 1 besteht aus einem drehfesten Gleitring 2 und einem umlaufenden Gleitring 3, der als Gegenring wirkt. Beide Gleitringe 2,3 bestehen aus abriebfestem Gußeisen und bilden zusammen mit zwei elastischen O-Ringen 4,5 eine Gleitringdichtung zum Einbau in eine Baumaschine. In der Zeichnung sind lediglich die die Gleitringdichtung 1 aufnehmenden Maschinenteile 6,7 angedeutet. Bei der Gleitringdichtung 1 handelt es sich um eine asymmetrische Gleitringdichtung, da die Gleitringe 2,3 eine unterschiedliche geometrische Kontur aufweisen.
Der Gleitring 3 weist eine konische Spannfläche 8 und im Maschinenteil 7 ebenfalls eine korrespondierende Spannfläche 8' auf Der stationäre Gleitring 2 besitzt eine zylindrische Spannfläche 9 und wirkt mit einem im Durchmesser kleiner ausgebildeten O-Ring 5 als der O-Ring 4 des Gleitringes 3 zusammen. Der O-Ring 5 stützt sich im Maschinenteil 6 an einer Radialfläche 10 und einer Axialfläche 11 ab.
Die Gleitringdichtung steht im Bereich unterhalb der Dichtfläche 12 im abzudichtenden Raum 13 unter hydrostatischem Druck. Der Druck ist durch Pfeile symbolisiert. Wie aus den Figuren 2a bis 2c zu entnehmen, ist der O-Ring 5,5',5'' mit Kanälen 14,14',14" versehen, die den hydrostatischen Druck auf die Rückenfläche 15 bis zu der durch die Axialfläche 11 und O-Ring 5,5',5'' gebildeten Druckbegrenzungslinie 16 leiten.
Auf diese Weise ist die Gleitringdichtung druckentlastet ausgebildet.
Die Kanäle 14,14',14'' können durch Ausnehmungen wie in Figur 2a dargestellt erzeugt werden oder wie in Figur 2b und Figur 2c durch noppenähnliche Vorsprünge 17,17' unterschiedlicher Geometrie.

## Patentansprüche

1. Vorrichtung mit zwei Maschinenteilen (6, 7), die mittels einer Gleitringdichtung abgedichtet sind, wobei die Gleitringdichtung aus einem drehfesten und einem umlaufenden Gleitring (2, 3) mit je einer Spannfläche zur Aufnahme eines elastischen O-Ringes (4, 5) besteht der im Einbauzustand zwischen der Spannfläche (8, 9) und einer korrespondierenden Fläche (8') eines Maschinenteiles (7) sich erstreckt, so daß durch Reibung eine Drehmomentsicherung erzeugt wird, wobei die Spannfläche (9) mindestens eines Gleitringes (2) und die korrespondierende Fläche des Maschinenteiles im Querschnitt rechteckig ausgebildet ist, so daß der O-Ring (5) in Einbaustellung an einer Axial - und einer Radialfläche (11, 10) des Maschinenteils (6) anliegt, **dadurch gekennzeichnet, daß** der O-Ring (5) auf seiner der Radialfläche (10) zugekehrten Rückenfläche (15) Kanäle (14,14',14'') aufweist, die es ermöglichen, den im Betrieb herrschenden hydrostatischen Druck auf Teile der Rückenfläche (10) und bis zur durch die Axialfläche (11) und O-Ring (5) gebildete Druckbegrenzungslinie (16) zu leiten.

2. Vorrichtung nach Anspruch 1, **dadurch gekennzeichnet, daß** die Kanäle (14') durch eine Vielzahl radial gerichteter Ausnehmungen auf der Rückenfläche (15) des O-Ringes (5') gebildet sind.

3. Vorrichtung nach Anspruch 1, **dadurch gekennzeichnet, daß** die Kanäle (14,14") durch eine Vielzahl axial gerichteter Vorsprünge (17,17') auf der Rückenfläche (15) des O-Ringes (5,5") gebildet sind.

## Claims

1. Device having two machine parts (6, 7), which are sealed by means of a rotating mechanical seal, said seal comprising a non-rotatable slip ring and a rotating slip ring (2, 3) each having a clamping surface to receive a resilient O-ring (4, 5) which extends, when fitted, between the clamping surface (8,9) and a corresponding surface (8') of a machine part (7) such that torque is ensured by friction, the clamping surface (9) of at least one slip ring (2) and the corresponding surface of the machine part being designed rectangular in cross-section such that, in its fitted position, the O-ring (5) abuts against an axial surface and a radial surface (11,10) of the machine part (6), **characterised in that** the O-ring (5) has on its rear surface (15), facing the radial surface (10), ducts (14,14',14") which make it possible to guide the hydrostatic pressure prevailing during operation onto parts of the rear surface (10) and as far as the pressure boundary line (16) formed by the axial surface (11) and O-ring (5).

2. Device according to claim 1, **characterised in that** the ducts (14') are formed by a large number of radially aligned recesses on the rear surface (15) of the O-ring (5').

3. Device according to claim 1, **characterised in that** the ducts (14,14') are formed by a large number of axially aligned projections (17,17') on the rear surface (15) of the O-ring (5,5").

## Revendications

1. Dispositif comprenant deux pièces de machine (6, 7), qui sont étanchéifiées au moyen d'une garniture d'étanchéité à anneau de glissement, la garniture d'étanchéité à anneau de glissement comprenant un anneau de glissement fixe en rotation (2) et un anneau de glissement rotatif (3) ayant chacun une surface de serrage pour la réception d'un anneau torique élastique (4, 5), qui, à l'état monté, s'étend entre la surface de serrage (8, 9) et une surface correspondante (8') d'une pièce de machine (7), de telle sorte que par friction une sécurité de couple est obtenue, la surface de serrage (9) d'au moins un anneau de glissement (2) et la surface correspondante de la pièce de machine étant réalisées avec une section transversale rectangulaire de telle sorte que l'anneau torique (5) dans la position montée repose contre une surface axiale (11) et une surface radiale (10) de la pièce de machine (6), **caractérisé en ce que** l'anneau torique (5) comprend sur sa surface arrière (15) tournée vers la surface radiale (10) des canaux (14, 14', 14"), qui permettent de transmettre la pression hydrostatique régnant en fonctionnement sur des parties de la surface arrière (10) et jusqu'à la ligne de limitation de pression (16) formée par la surface axiale (11) et l'anneau torique (5).

2. Dispositif selon la revendication 1, **caractérisé en ce que** les canaux (14') sont formés par plusieurs évidements orientés radialement situés sur la surface arrière (15) de l'anneau torique (5').

3. Dispositif selon la revendication 1, **caractérisé en ce que** les canaux (14, 14") sont formés par plusieurs projections orientées axialement (17, 17') situées sur la surface arrière (15) de l'anneau torique (5, 5").
